(19) Europäisches Patentamt
European Patent Office
Office européen des brevets

(11) **EP 3 296 835 B1**

(12) **FASCICULE DE BREVET EUROPEEN**

(45) Date de publication et mention
de la délivrance du brevet:
**27.04.2022 Bulletin 2022/17**

(21) Numéro de dépôt: **17190952.6**

(22) Date de dépôt: **13.09.2017**

(51) Classification Internationale des Brevets (IPC):
***G06F 1/14*** *(2006.01)*

(52) Classification Coopérative des Brevets (CPC):
**G06F 1/14**

(54) **PROCÉDÉ DE SYNCHRONISATION D'UN SYSTÈME PAR DÉTERMINATION D'UN INTERVALLE DE TEMPS LOCAL COMMUN**

VERFAHREN ZUR SYNCHRONISIERUNG EINES SYSTEMS DURCH BESTIMMUNG EINES GEMEINSAMEN LOKALEN ZEITINTERVALLS

METHOD FOR SYNCHRONIZING A SYSTEM BY DETERMINING A COMMON LOCAL TIME INTERVAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.09.2016 FR 1658634**

(43) Date de publication de la demande:
**21.03.2018 Bulletin 2018/12**

(73) Titulaire: **ALSTOM Transport Technologies
93400 Saint-Ouen (FR)**

(72) Inventeur: **ANTONIO, Raphael
69008 LYON (FR)**

(74) Mandataire: **Lavoix
2, place d'Estienne d'Orves
75441 Paris Cedex 09 (FR)**

(56) Documents cités:
EP-A1- 0 548 381    EP-A1- 2 219 086
WO-A1-01/27726    WO-A1-2014/051615
CN-A- 104 268 037    US-A- 6 026 497
US-A1- 2011 154 090

**Description**

La présente invention concerne un procédé de synchronisation d'un système. La présente invention se rapporte également à un contrôleur, un système et une installation ferroviaire associés.

L'invention s'applique au domaine ferroviaire, le procédé et le système étant destinés à une installation ferroviaire.

De façon classique, les installations ferroviaires comprennent des stations dotées de quais destinés, par exemple, à la descente et à la montée de passagers.

Il est connu de munir les quais de façades de quai, également appelées portes palières, et désignées par l'acronyme PSD de l'anglais « Platform Screen Doors ». Les façades de quai sont situées en bordure des voies et sont essentiellement destinées à empêcher des suicides ou des accidents de passagers.

Les façades de quai définissent une position d'ouverture et une position de fermeture. De telles façades de quai sont pilotées de façon automatique de sorte, par exemple, à n'être en position d'ouverture que lorsqu'un véhicule est stationné à un quai.

En outre, certaines installations ferroviaires sont dotées d'un système de contrôle automatique du trafic ferroviaire, également désigné par l'acronyme CBTC de l'anglais « Communication Based Train Control ». Il s'agit d'un système basé sur une communication entre des véhicules et des dispositifs en charge de la gestion du trafic.

Lorsque les quais sont dotés de façades de quai, le système CBTC assure l'articulation entre la position d'ouverture ou de fermeture des façades de quai et la circulation des véhicules. A titre d'illustration, un véhicule approchant d'un quai doté de façades de quai ne sera autorisé à entrer en station chaque si les façades de quai sont bien verrouillées en position de fermeture.

Un tel système CBTC est donc un système distribué devant donc garantir une bonne sécurité tout en permettant un temps de réponse le plus rapide possible.

Les documents WO 2014/051615, US 2011/154090, US 6 026 497, EP 0 548 381 et WO 2014051615 divulguent d'autres systèmes de l'art antérieur.

Il existe donc un besoin pour un procédé garantissant une bonne sécurité dans un système distribué tout en permettant un temps de réponse le plus rapide possible

L'invention est définie par les revendications indépendantes.

Les revendications dépendantes définissent des modes de réalisation avantageux.

D'autres caractéristiques et avantages de l'invention apparaîtront à la lecture de la description qui suit de modes de réalisation de l'invention, la description étant donnée à titre d'exemple uniquement et en référence aux dessins qui sont :

- figure 1, une représentation schématique d'une installation ferroviaire,
- figure 2, un ordinogramme d'un exemple de mode de fonctionnement de l'installation ferroviaire,
- figure 3, un ordinogramme d'un exemple de mise en œuvre d'un autre exemple de procédé de synchronisation,
- figures 4 et 5, des ordinogrammes d'un exemple de mise en œuvre d'un autre exemple de procédé de synchronisation, et
- figures 6 et 7, un ordinogramme d'un exemple de mise en œuvre d'un autre exemple de procédé de synchronisation.

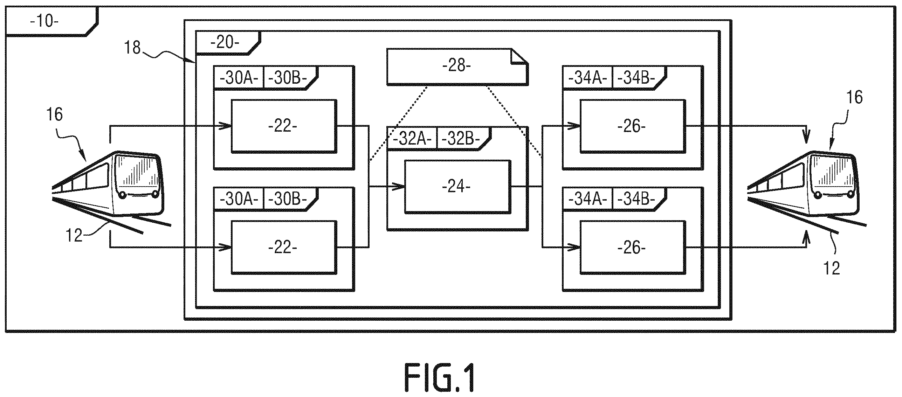

Une installation ferroviaire 10 est représentée schématiquement sur la figure 1.

L'installation ferroviaire 10 est, par exemple, une installation de transport ferroviaire urbain de type métro ou tramway.

L'installation ferroviaire 10 comprend des voies 12, au moins une station, au moins un véhicule 16 et un système de gestion 18.

Les voies 12 sont propres à assurer la circulation de véhicules 16.

Les stations définissent des lieux dans lesquels les véhicules 16 sont susceptibles de stationner.

Chaque station comprend au moins un quai.

Généralement, un véhicule 16 stationne à un quai d'une station pour permettre la circulation de passagers entre le véhicule 16 et le quai.

Au moins certains quais ont des façades de quai.

Les façades de quai sont généralement installées en bordure de voies 12 et sont, par exemple, formées par des portes et des façades séparant le quai des voies 12. Les façades et les portes sont, par exemple, vitrées et présentent une hauteur suffisante pour dissuader un individu de les enjamber.

Les façades de quai sont destinées à améliorer la sécurité, notamment en empêchant des usagers de se rendre sur les voies 12.

Il est défini une position de fermeture et une position d'ouverture pour les façades de quai.

Dans la position de fermeture, les portes sont fermées et verrouillées.

Dans la position d'ouverture, les portes sont ouvertes et/ou non verrouillées.

En outre, les façades de quai installées sur un quai comprennent un module de gestion de façades de quai, non représenté sur les figures.

Le module de gestion de façades de quai est adapté pour recevoir des signaux de commande et pour émettre au moins un signal d'état.

Dans l'exemple de la figure 1, les signaux de commande sont un signal d'ouverture et un signal de fermeture.

A la réception du signal d'ouverture, respectivement de fermeture, le module de gestion de façades de quai est adapté pour passer les façades de quai dans la position d'ouverture, respectivement de fermeture.

Le signal d'état est un signal indiquant que les portes des façades de quai sont verrouillées en position de fermeture.

Le véhicule 16 est adapté pour circuler sur les voies 12 et est, par exemple, un véhicule ferroviaire tel un métro ou un tramway.

Le système de gestion 18 est destiné à assurer la circulation d'un véhicule 16 dans l'installation ferroviaire 10 indépendamment de la présence ou non de façades de quai.

Le système de gestion 18 comprend au moins un contrôleur 20 installé dans chaque véhicule 16.

Le contrôleur 20 comporte des modules d'entrée 22, un calculateur 24 et des modules de sortie 26.

En variante, le contrôleur 20 comporte une pluralité de calculateurs 24.

Le système de gestion 18 comporte aussi une interface de communication 28.

L'interface de communication 28 est notamment propre à assurer une communication bidirectionnelle entre le contrôleur 20 d'une part et des équipements installés sur les quais d'autre part.

L'interface de communication 28 est aussi propre à assurer une communication entre chaque module d'entrée 22 et chaque module de sortie 26.

Par exemple, les communications entre le module de gestion des façades et le contrôleur 20 ou un élément du contrôleur 20 sont mises en œuvre par voie radio via l'interface de communication 28 et les communications entre les modules d'entrée 22 et de sortie 26 sont mises en œuvre par voie filaire.

Le contrôleur 20 est, par exemple, la partie embarquée d'un système CBTC.

Dans ce cas, le contrôleur est, par exemple, l'ATC embarqué, de l'anglais « Automatic Train Control ».

Le contrôleur 20 comprend une antenne et est adapté pour échanger par voie radio des messages avec le module de gestion des façades en utilisant l'interface de communication 28.

En outre, le contrôleur 20 comprend une mémoire comprenant des instructions logicielles et un processeur propre à exécuter au moins une partie des instructions.

En variante, le contrôleur 20 comporte une pluralité de mémoires et/ou une pluralité de processeurs, chaque mémoire comprenant des instructions logicielles et chaque processeur étant propre à exécuter au moins une partie des instructions.

Chaque module d'entrée 22 est propre à recevoir des données provenant d'au moins un capteur et à produire un signal d'entrée correspondant à au moins une partie des données reçues.

Chaque module d'entrée 22 comporte une pluralité de chaînes de traitement redondantes, la redondance assurant une sécurité du résultat obtenu.

Chaque chaîne de traitement du module d'entrée 22 comporte une première horloge locale 30A propre.

La première horloge locale 30A est propre à cadencer la chaîne de traitement. Cela signifie que chaque chaîne de traitement du module d'entrée 22 effectue ses opérations au rythme donné par sa première horloge locale 30A.

Chaque chaîne de traitement du module d'entrée 22 est ainsi propre à effectuer des opérations à un rythme basé sur des dates locales fournies par sa horloge locale 30A.

Chaque chaîne de traitement du module d'entrée 22 comporte aussi une deuxième horloge locale 30B propre.

La deuxième horloge locale 30B est propre à dater les événements.

En ce sens, la deuxième horloge locale 30B est qualifiable d'horloge sécuritaire.

Selon un mode de réalisation, la deuxième horloge locale 30B est un composant physique dédié.

Selon un autre mode de réalisation, la deuxième horloge locale 30B est un simple compteur incrémenté par la première horloge locale 30A.

Le calculateur 24 comporte une pluralité de chaînes de traitement redondantes, la redondance assurant une sécurité du résultat obtenu.

Chaque chaîne de traitement du calculateur 24 comporte une première horloge locale 32A propre cadençant la chaîne de traitement respective.

Ainsi, chaque chaîne de traitement est ainsi propre à effectuer des opérations à un rythme basé sur des dates locales fournies par sa première horloge locale 32A.

Chaque chaîne de traitement du calculateur 24 comporte aussi une deuxième horloge locale 32B propre.

La deuxième horloge locale 32B est propre à dater les événements.

En ce sens, la deuxième horloge locale 32B est qualifiable d'horloge sécuritaire.

Selon un mode de réalisation, la deuxième horloge locale 32B est un composant physique dédié.

Selon un autre mode de réalisation, la deuxième horloge locale 32B est un simple compteur incrémenté par la première horloge locale 32A.

Chaque module de sortie 26 est propre à envoyer des ordres à un actionneur, ces ordres étant un signal de sortie.

Chaque module de sortie 26 comporte une pluralité de chaînes de traitement redondantes, la redondance assurant une sécurité du résultat obtenu.

Chaque chaîne de traitement du module de sortie 26 comporte une première horloge locale 34A propre.

La première horloge locale 34A est propre à cadencer les chaînes de traitement du module de sortie 26. Cela signifie que chaque chaîne de traitement du module de sortie 26 effectue ses opérations au rythme donné par sa première horloge locale 34A.

Chaque chaîne de traitement du module de sortie 26 est ainsi propre à effectuer des opérations à un rythme basé sur des dates locales fournies par sa première horloge locale 34A.

Chaque chaîne de traitement du module de sortie 26 comporte aussi une deuxième horloge locale 34B propre.

La deuxième horloge locale 34B est propre à dater les événements.

En ce sens, la deuxième horloge locale 34B est qualifiable d'horloge sécuritaire.

Selon un mode de réalisation, la deuxième horloge locale 34B est un composant physique dédié.

Selon un autre mode de réalisation, la deuxième horloge locale 34B est un simple compteur incrémenté par la première horloge locale 34A.

Sauf mention expresse :

- les horloges locales 30, 32 et 34 ne sont pas synchronisées entre elles.
- les premières horloges locales A (servant à cadencer) de l'ensemble des chaînes de traitement composant un module donné sont synchronisées par un procédé non décrit. Ainsi, à n'importe quel instant, les chaînes réalisent les mêmes traitements.
- les premières et deuxièmes horloges A et B d'une chaîne de traitement donnée sont synchronisées. Ainsi, l'horloge locale B (servant à dater) est mise à jour à la période des cycles.

Par horloge locale, dans ce contexte, il est entendu de manière indifférente la première horloge locale 30A, 32A, 34A ou la deuxième horloge locale 30B, 32B, 34B. Ainsi, l'horloge locale 30, 32 et 34 est propre à cadencer une chaîne de traitement et à dater des événements.

En outre, la résolution de chaque horloge 30, 32 et 34 est, par exemple, supérieure ou égale à 100 millisecondes.

Dans certains modes de réalisation, le système 18 comporte une horloge globale cadençant le système 18.

Le contrôleur 20 est propre à assurer une synchronisation entre ses différents éléments par la mise en œuvre d'un procédé de synchronisation du système 18.

Avant de décrire en détail des modes de réalisation de procédé de synchronisation du système 18, il convient de décrire rapidement un mode de fonctionnement de l'installation ferroviaire 10 correspondant à l'état de la technique pour mieux mettre en évidence les avantages des modes de réalisation de procédé de synchronisation du système 18.

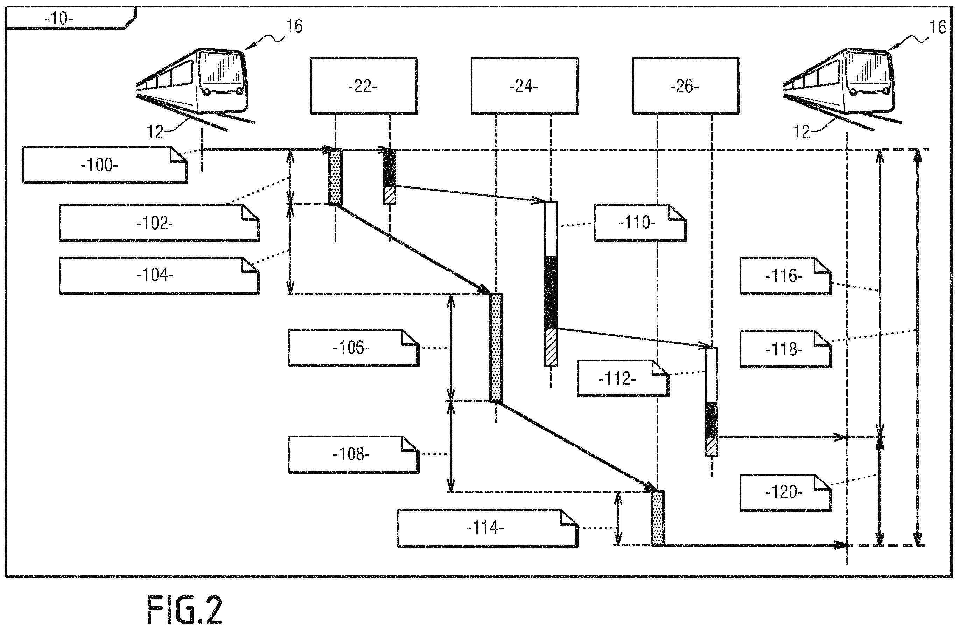

Le cas de la figure 2 est ainsi décrit dans ce qui suit.

Les cadres repérés par les signes de référence 100, 102, 104, 106, 108, 110, 112, 114, 116, 118 et 120 illustrent les éléments principaux de cet exemple de mise en œuvre.

Plus précisément, le cadre 100 représente l'acquisition d'un signal commun ; le cadre 102 représente le pire cas de temps de réponse d'un module d'entrée 22 ; le cadre 104 représente le pire cas de latence dans la transmission de données entre un module d'entrée 22 et le calculateur 24 ; le cadre 106 représente le pire cas de temps de réponse du calculateur 24: le cadre 108 représente le pire cas de latence dans la transmission de données entre le calculateur 24 et un module de sortie 26 ; les cadres 110 et 112 illustrent schématiquement l'asynchronisme ; le cadre 114 représente le pire cas de temps de réponse d'un module de sortie 26 ; le cadre 116 représente le temps de réponse réel du contrôleur 20 ; le cadre 120 représente la marge de sécurité, le cadre 118 correspondant au temps de réponse en sécurité du contrôleur 20, c'est-à-dire la somme du temps de réponse réel et de la marge de sécurité.

Ainsi, dans le mode de fonctionnement illustré par la figure 2, il apparaît que chaque élément du contrôleur 20 met en œuvre son cycle en utilisant son horloge locale. Les cycles de chaque élément du contrôleur 20 s'exécutent donc de manière asynchrone. Le temps de réponse en sécurité du contrôleur 20 (c'est-à-dire pour lequel le fonctionnement de l'installation ferroviaire 10 est assuré) est la somme de quatre éléments qui sont :

- le temps de réponse réel du contrôleur 20, le temps de réponse dépendant notamment du temps de réponse des modules d'entrée 22, du temps de réponse du calculateur 24, du temps de réponse des modules de sortie 26, de la latence de l'interface de communication 28 et des asynchronismes entre ces différents éléments du contrôleur 20,
- la marge à prendre en compte correspondant à la somme des différences entre le temps de réponse réel et le temps de réponse pire cas d'un des modules d'entrée 22, du calculateur 24 et de l'un des modules de sortie 26,

- la marge due à la différence entre le temps de transmission réel et le temps de transmission pire cas entre un module d'entrée 22 et le calculateur 24, et entre le calculateur 24 et le module de sortie 26, et
- la marge due à la résolution des horloges 30, 32 ,34 utilisées pour garantir les temps de réponse pire cas et les temps de transmission pire cas

L'ensemble des modes de réalisation de procédé de synchronisation vise à réduire au moins l'un des quatre éléments précédents.

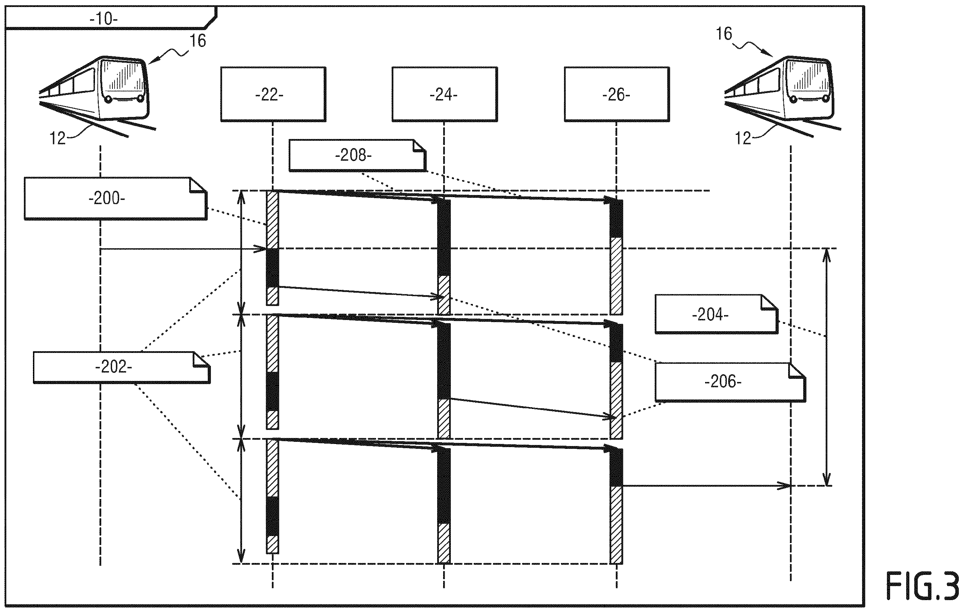

Un exemple de mise en œuvre d'un procédé de synchronisation est à présent décrit en référence à la figure 3.

La figure 3 est un ordinogramme dans lequel les cadres repérés par les signes de référence 200, 202, 204, 206 et 208 illustrent les éléments principaux d'un premier exemple de mise en œuvre d'un procédé de synchronisation.

Un tel procédé permet de réduire le temps de réponse réel du contrôleur 20 en supprimant l'asynchronisme entre les horloges locales 30, 32 et 34 en les synchronisant à l'horloge globale.

Le procédé de synchronisation comporte l'envoi d'un signal de synchronisation par un module dédié, faisant par exemple partie du contrôleur. Cet envoi est symbolisé par le cadre 208.

L'envoi est mis en œuvre plusieurs fois de manière à assurer une forte redondance dans la réception du signal de synchronisation

Le signal de synchronisation se propage avec un temps de latence faible.

Selon l'exemple décrit, le signal de synchronisation comporte un identifiant.

Dès réception du signal de synchronisation ayant l'identifiant attendu, chaque élément du contrôleur 20 met en œuvre les opérations à effectuer.

Pour garantir le fonctionnement synchrone du contrôleur 20, chaque élément du contrôleur 20 termine ses opérations et transmet les messages avant l'arrivée du signal de synchronisation suivant.

En cas d'indisponibilité du signal de synchronisation, l'élément du contrôleur 20 met en œuvre les opérations à effectuer à une cadence plus lente que la cadence de l'horloge globale illustrée par le cadre 202. Cela permet que, dès que l'élément du contrôleur 20 est à nouveau capable de recevoir le signal de synchronisation, la synchronisation du système 18 soit aisée à mettre en œuvre.

Dans un tel premier exemple, le procédé permet une synchronisation et une mise en œuvre des opérations à effectuer par le système 18 qui soit plus rapide. Cela est mis en évidence par les cadres 204 et 206 qui montrent que l'asynchronisme est supprimé et que le temps réel de réponse est plus restreint que trois cycles.

En outre, le cadre 200 illustre un délai constant permettant d'optimiser le temps de réponse du système 18.

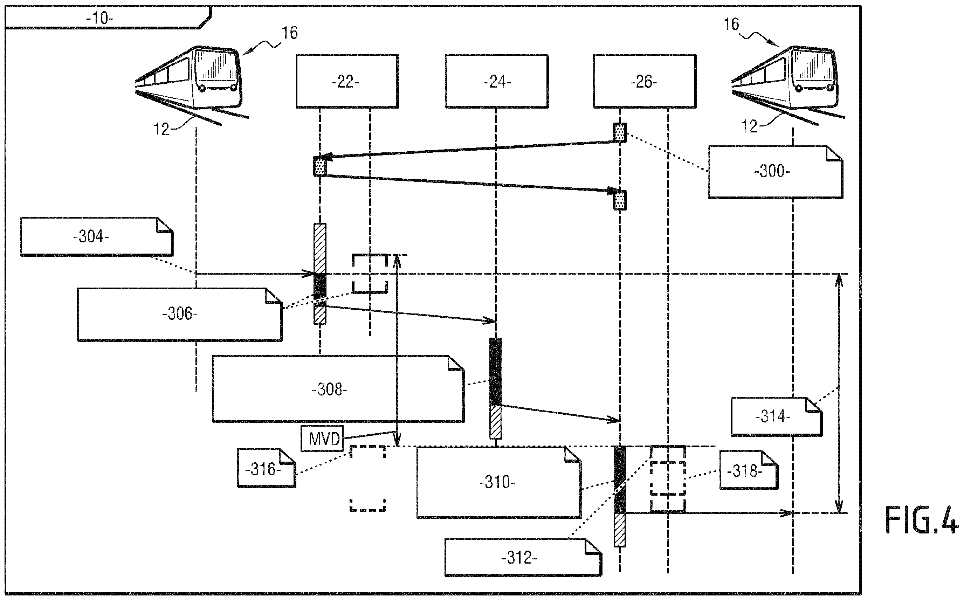

Un deuxième exemple de mise en œuvre d'un procédé de synchronisation est à présent décrit en référence à la figure 4.

La figure 4 est un ordinogramme dans lequel les cadres repérés par les signes de référence 300, 302, 304, 306, 308, 310, 312, 314, 316 et 318 illustrent les éléments principaux d'un deuxième exemple de mise en œuvre d'un procédé de synchronisation.

Il est à noter qu'apparaissent aussi les signes de référence MVD et des crochets, le signe de référence MVD renvoyant au terme anglais « Maximum Validity Duration » qui signifie « durée maximale de validité » et les crochets indiquant soit la valeur minimale sur la base locale de la deuxième horloge à un instant donnée, soit la valeur maximale sur la base locale de la deuxième horloge à un instant donnée.

Le procédé comporte, pour chaque signal d'entrée produit par chaque chaîne de traitement d'un module d'entrée 22, l'association d'une date d'entrée exprimée dans l'horloge locale de la chaîne de traitement du module d'entrée 22 ayant produit le signal (voir cadre 306).

Le procédé comporte aussi, la transmission de chaque signal d'entrée depuis un module d'entrée 22 vers le calculateur 24.

Comme illustré par le cadre 308, le procédé comporte également, la génération de signaux de sortie à destination d'un ou plusieurs modules de sortie 26.

Un signal de sortie est le résultat de l'application d'une première fonction $f_1$ spécifique au signal de sortie à au moins un signal d'entrée reçu.

Ainsi, la première fonction $f_1$ détermine la valeur du signal de sortie.

Par exemple, la première fonction $f_1$ est une opération logique appliquée à une pluralité de signaux d'entrée reçus. L'opération « AND » ou l'opération « OR » sont des cas particuliers d'opération logique.

Dans le cas où un seul signal d'entrée reçu est impliqué dans la première fonction $f_1$, un autre signal distinct d'un signal d'entrée reçu peut être impliqué dans le calcul du signal de sortie. Typiquement, un signal correspondant à un autre signal d'entrée reçu mais déphasé d'une valeur connue peut être utilisé. Les opérations logiques précédentes sont alors appliquées au signal d'entrée reçu et au signal correspondant à un autre signal d'entrée reçu mais déphasé d'une valeur connue.

Le procédé comprend aussi, pour chaque signal de sortie, le calcul d'une durée de fin de validité du signal de sortie par utilisation d'une deuxième fonction $f_2$ (voir cadre 316).

La deuxième fonction $f_2$ est déduite de la première fonction $f_1$ spécifique au signal de sortie et appliquée sur les dates d'entrée locale associées à chaque signal d'entrée reçu sur lequel la première fonction spécifique $f_1$ a été appliquée.

Dans ce cas, la deuxième fonction $f_2$ permet de déterminer la validité temporelle du signal de sortie calculé par la première fonction $f_1$. La validité temporelle est exprimée sous forme d'une date de fin de validité.

Selon un cas particulier, la deuxième fonction $f_2$ est une opération ensembliste appliquée aux dates.

Pour un cas à deux signaux dont la date d'acquisition est respectivement d1 et d2, les opérations suivantes sont envisageables pour la deuxième fonction $f_2$ :

- union (d1, d2) ;
- intersection (d1, d2) ;
- min (d1, d2) ;
- max (d1, d2), et
- d2+durée prédéfinie.

A titre d'illustration particulier, il est acquis un premier signal d'entrée binaire E1 et un deuxième signal d'entrée binaire E2.

Le signal de sortie binaire notée S est calculée par application de la première fonction $f_1$ de sorte que S = E1 AND E2, la première fonction $f_1$ est alors l'opération logique qui associe à deux grandeurs binaires A et B la valeur de A AND B.

Par ailleurs, pour ce signal de sortie, il est effectué le calcul d'une durée de fin de validité du signal de sortie par utilisation d'une deuxième fonction $f_2$.

Dans ce cas particulier, la deuxième fonction $f_2$ s'exprime comme suit :

$$f_2 = \text{min (date d'acquisition de E1, date d'acquisition de E2)} + 100 \text{ ms.}$$

Le procédé comprend aussi la transmission de chaque signal de sortie depuis le calculateur 24 vers le module de sortie 26.

Le procédé comprend également l'estimation par chaque chaîne de traitement de chaque module de sortie 26, du décalage entre l'horloge locale 34 de la chaîne de traitement du module de sortie 26 et l'horloge locale 30 d'au moins un module d'entrée 22.

En outre, l'estimation des décalages est mise à jour périodiquement, et extrapolée entre deux mises à jour.

L'estimation est, par exemple, mise en œuvre par une synchronisation entre le module de sortie 26 et au moins un module d'entrée 22 (voir cadre 300). Par exemple, le module de sortie 26 envoie un signal contenant la date d'envoi selon son horloge locale 34 pour connaître l'heure locale de l'horloge locale 30 du module d'entrée 22. Le module d'entrée 22 envoie à son tour un signal contenant entre autres la date de réception selon son horloge locale du signal précédemment émis par le module de sortie 26. Le décalage correspond à la différence entre la date de réception par le module d'entrée 22 du signal envoyé par le module de sortie 26 et la date d'envoi par le module de sortie 26 du signal envoyé vers le module d'entrée 22, compensée par la durée de transmission pire cas du signal émis par le module de sortie 26.

Autrement formulé, les modules de sortie 26 estiment le décalage entre leur base de temps locale et la base temporelle de chaque module d'entrée 22. Cette opération requiert d'assurer un pire cas de temps de transmission entre le module d'entrée 22 et le module de sortie 26.

Comme montré schématiquement par les cadres 300, 310, 312, 316 et 318 le procédé comporte alors, pour chaque durée de fin de validité du signal de sortie une opération de changement de base de temps depuis l'horloge du module d'entrée 22 (voir plus spéciquement le cadre 316) vers l'horloge du module de sortie 26 (voir cadre 318), dont le résultat est avantageusement compensé d'une marge de sécurité par le module de sortie 26 (voir cadre 312).

Dans l'exemple illustré, la marge de sécurité est le pire cas de décalage obtenu à l'étape d'estimation. La marge de sécurité est alors propre à chaque module de sortie 26.

Selon un autre mode de réalisation, la marge de sécurité est inférieure ou égale à la durée de transmission la plus longue d'une donnée entre un module d'entrée 22 et un module de sortie 26.

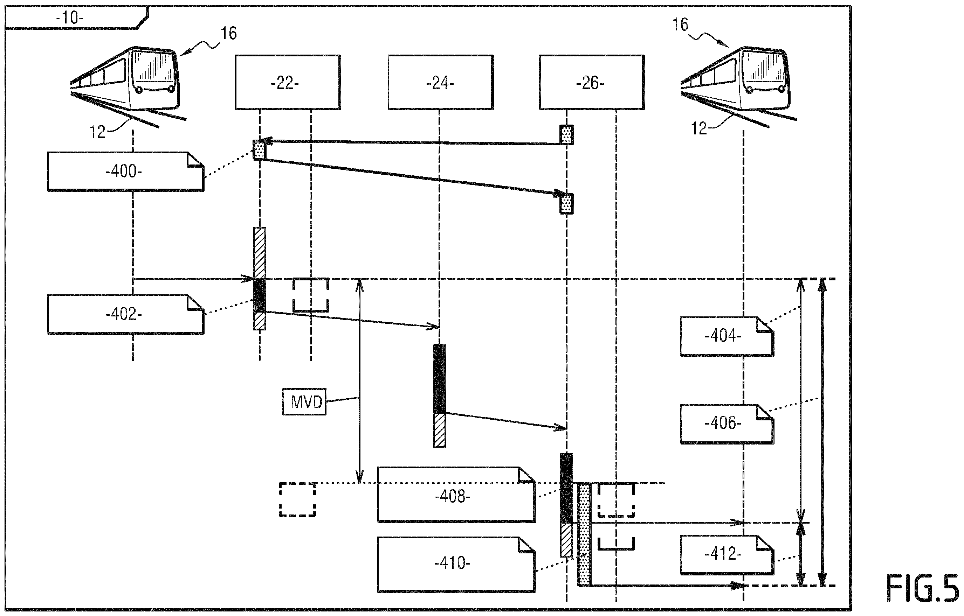

Comme le montre schématiquement la figure 5 correspondant au pire scénario, la marges de sécurité liée aux temps de transmission entre un module d'entrée 22 et le calculateur 24 et de transmission entre le calculateur 24 et le module de sortie 26 est réduite.

Dans la figure 5, le cadre dont le numéro de référence est 400 correspond à un temps de transfert dégradé ; le cadre 402 à une acquisition dégradée, le cadre 408 à l'arrêt du rafraichissement des données lorsque le temps de fin de validité du signal de sortie a expiré ; le cadre 410 au pire cas de latence du module de sortie 26 ; le cadre 404 le temps de réponse réel du contrôleur 20 ; le cadre 412 représente la marge de sécurité, le cadre 406 correspondant au temps de réponse en sécurité du contrôleur 20, c'est-à-dire la somme du temps de réponse réel et de la marge de sécurité.

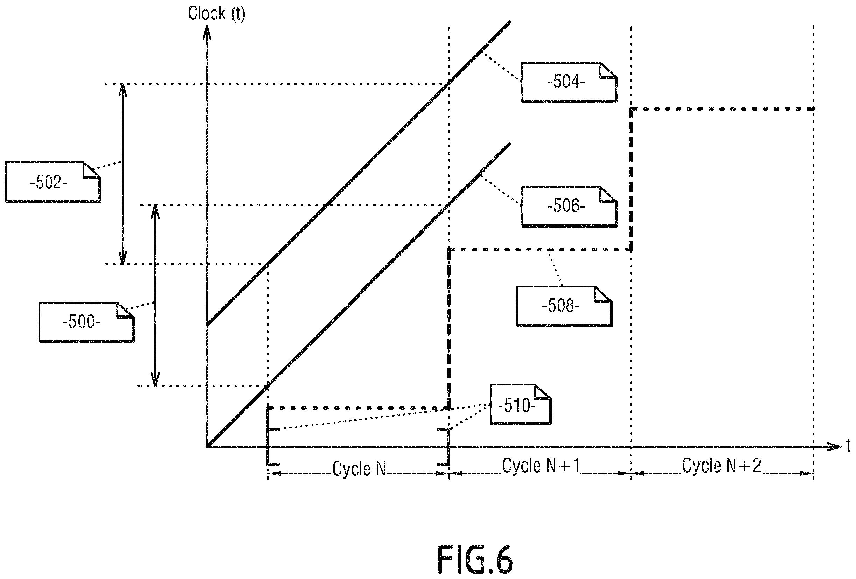

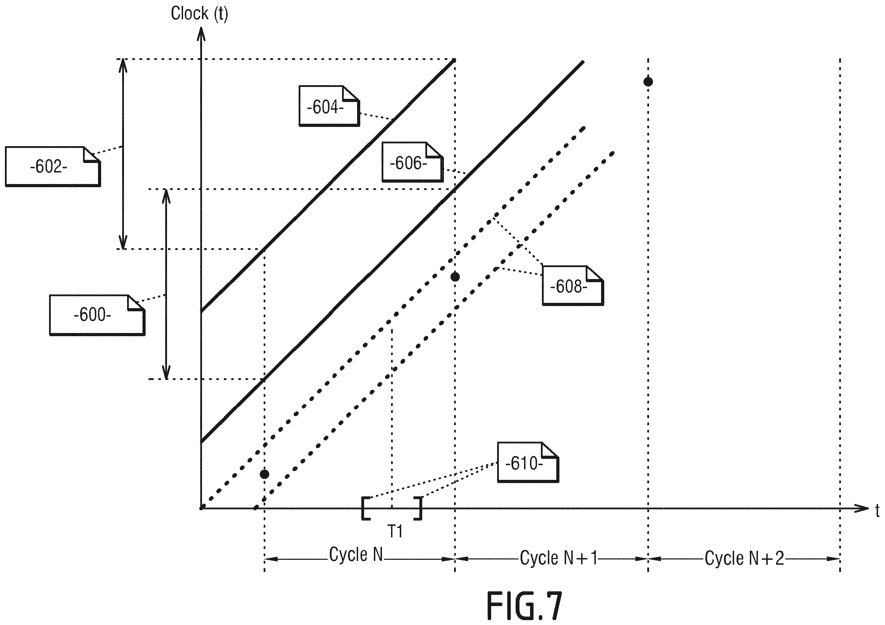

Un troisième exemple de mise en œuvre d'un procédé de synchronisation est à présent décrit en référence aux figures 6 et 7.

Le procédé supprime la synchronisation des horloges locales A et B d'une chaîne de traitement donnée. L'horloge servant à cadencer A est mise à jour à la période du cycle de la chaîne de traitement. L'horloge servant à dater est mise à jour à une période bien inférieure, celle-ci n'étant plus contrainte par la durée des traitements à réaliser à chaque cycle.

Le procédé définit une horloge supplémentaire sur chaque chaîne de traitement de chaque module, appelée horloge du module.

Selon un mode de réalisation, l'horloge du module est un composant physique dédié.

Selon un autre mode de réalisation, l'horloge du module est un simple compteur incrémenté par l'horloge locale B.

Le procédé de synchronisation comporte la fourniture d'un premier instant par l'horloge globale pour chaque chaîne de traitement.

En variante, la fourniture du premier instant est effectuée par une des chaînes de traitement.

Dans l'exemple représenté, il n'est considéré que deux chaînes de traitement. Les horloges locales de chaque chaîne du module considéré sont illustrées respectivement par le cadre 504 et le cadre 506.

Le procédé comporte aussi la conversion du premier instant en premier instant local pour chaque chaîne de traitement.

Le procédé comprend également la mise en œuvre de la même série d'opérations sur les mêmes données d'entrées sur chaque chaîne de traitement à partir du premier instant local.

Il est ensuite incrémenté l'horloge locale B propre de chaque chaîne de traitement tant que la série d'opérations est mise en œuvre, pour obtenir un deuxième instant local.

Le procédé comporte alors le calcul d'un intervalle de temps local défini comme la différence entre le deuxième instant local et le premier instant local.

Les deux intervalles de temps locaux ainsi obtenus sont représentés respectivement par le cadre 500 et le cadre 502.

Il est ensuite mis en œuvre la comparaison des intervalles de temps locaux calculés pour déterminer un intervalle de temps local commun à une majorité de chaîne de traitement.

La comparaison est mise en œuvre par un mécanisme de vote.

Chaque chaîne de traitement incrémente son horloge du module d'une quantité égale à l'intervalle de temps local commun déterminé précédemment. L'horloge du module est ainsi synchronisée sur les deux chaînes de traitement. L'horloge du module résultante est représentée par le cadre 508.

L'horloge du module est utilisée par chaque chaîne de traitement pour dater les événements.

Dans ce cas, il apparaît bien que l'erreur temporelle d'attribution d'une date à n'importe quel instant T1 est fonction de la période entre deux instants d'incrémentation de l'horloge du module 510.

Un tel procédé permet de réduire la marge due à la résolution de l'horloge globale puisque le procédé proposé ne fait pas appel à l'horloge globale pour dater un instant pour toutes les deuxièmes horloges locales 30B, 32B et 34B, la période entre 2 instants d'incrémentation de l'horloge du module pouvant être inférieure à la période de l'horloge globale.

Selon un autre mode de réalisation illustrée par la figure 7 (voir notamment cadres 600, 602, 604, 606, 608, 610), le procédé comporte, en plus du procédé décrit précédemment, un calcul d'estimation de l'horloge du module entre les deux instants de mise à jour de l'horloge du module.

Entre ces deux instants, à tout instant, chaque chaîne incrémente son horloge de module.

A tout instant, chaque chaîne de traitement peut estimer la valeur minimum de l'horloge du module, par exemple en soustrayant à la valeur courante de l'horloge du module, une marge de sécurité. De même, chaque chaîne de traitement peut estimer la valeur maximum de l'horloge du module en ajoutant à la valeur courante de l'horloge du module, une seconde marge de sécurité. L'horloge du module résultante est représentée par le cadre 608.

Formulé autrement, le procédé comporte la fourniture d'une première marge de temps. Il est à noter que cette marge est soit une constante, soit calculée en fonction de la durée écoulée entre l'instant de l'opération considérée, et le temps écoulée depuis la dernière resynchronisation des horloges du module. Le procédé comprend également la fourniture d'un instant local correspondant à l'exécution de la même opération sur chacune des chaînes de traitement du module considéré, la datation dudit instant local dans l'horloge du module de chaque chaîne de traitement du module considéré, et la fixation d'un minorant de l'ensemble des horloges du module à l'instant d'exécution de l'opération considérée comme étant le minimum des datations locales auquel la première marge de temps est soustraite.

Selon un autre mode de réalisation ou en complément, le procédé comporte la fourniture d'une deuxième marge de temps, la fourniture d'un instant local correspondant à l'exécution de la même opération sur chacune des chaînes de traitement du module considéré, la datation dudit instant local dans l'horloge locale du module de chaque chaîne de traitement du module considéré et la fixation d'un majorant de l'ensemble des horloges du module à l'instant d'exécution de l'opération considérée comme étant le maximum des datations locales auquel la deuxième marge de temps est additionnée.

Les marges de sécurité sont calculées en fonction de la précision des instants locaux sur chacune des chaînes et de la résolution de l'horloge locale.

Dans ce cas, il apparaît bien que l'erreur temporelle d'attribution d'une date à n'importe quel instant est une fonction de la résolution de l'horloge locale de chaque chaîne et des performances de synchronisation entre chaque chaîne (voir cadre 610).

L'ensemble des modes de réalisation de procédé de synchronisation proposé permettent donc de réduire au moins l'un parmi le temps de réponse réel du contrôleur 20, la marge liée au temps de réponse du contrôleur, la marge due aux temps de transmission et la marge due à la résolution de l'horloge globale.

En combinant les modes de réalisation, lorsque cela est techniquement possible, de nouveaux modes de réalisation du procédé de synchronisation sont obtenus, ces nouveaux modes présentant des performances améliorées en termes de rapidité tout en garantissant une réponse du système 18 remplissant les critères de sécurité.

Par ailleurs, le système 18 proposé s'applique pour d'autres domaines de l'automatisation pour les systèmes distribués, pourvu que soit présent un contrôleur présentant des caractéristiques similaires au contrôleur 20 précédemment décrit.

**Revendications**

1.  Procédé de synchronisation d'un système (18) comportant une pluralité de chaînes de traitement redondantes, le système (18) comportant une horloge globale cadençant le système (18), chaque chaîne de traitement comportant une première horloge locale (30A, 32A, 34A) propre cadençant la chaîne de traitement respective, et une deuxième horloge locale (30B, 32B, 34B) propre à mesurer le temps, le procédé comportant :

    - la fourniture d'un premier instant par l'horloge globale pour chaque chaîne de traitement,
    - la conversion du premier instant en premier instant local pour chaque chaîne de traitement,
    - la mise en œuvre de la même série d'opérations sur les mêmes données d'entrées sur chaque chaîne de traitement à partir du premier instant local,
    - l'incrémentation de la deuxième horloge locale (30B, 32B, 34B) propre de chaque chaîne de traitement tant que la série d'opérations est mise en œuvre, pour obtenir un deuxième instant local,
    - le calcul d'un intervalle de temps local défini comme la différence entre le deuxième instant local et le premier instant local,
    - la comparaison des intervalles de temps locaux calculés pour déterminer un intervalle de temps local commun à une majorité de chaînes de traitement, la comparaison mettant en œuvre un mécanisme de vote,

    dans lequel chaque chaîne de traitement comporte une troisième horloge locale propre à dater les événements, le procédé comportant en outre :

    - la synchronisation des troisièmes horloges locales de chaque chaîne de traitement sur l'intervalle de temps local commun, chaque chaîne de traitement incrémentant sa troisième horloge locale d'une quantité égale à l'intervalle de temps local commun, la troisième horloge locale étant ainsi synchronisée sur les autres chaînes de traitement.

2.  Procédé selon la revendication 1, dans lequel le procédé comporte, en outre :

    - la fourniture d'une première marge de temps, et
    - la fourniture d'un instant local correspondant à l'exécution de la même opération sur chacune des chaînes de traitement,
    - la datation dudit instant local dans la troisième horloge locale de chaque chaîne de traitement, et
    - la fixation d'un minorant de l'ensemble des troisièmes horloges locales à l'instant d'exécution de l'opération considérée comme étant le minimum des datations locales auquel la première marge de temps est soustraite.

3.  Procédé selon la revendication 1 ou 2, dans lequel le procédé comporte, en outre :

    - la fourniture d'une deuxième marge de temps, et
    - la fourniture d'un instant local correspondant à l'exécution de la même opération sur chacune des chaînes de traitement,

- la datation dudit instant local dans la troisième horloge locale de chaque chaîne de traitement,
- la fixation d'un majorant de l'ensemble des troisièmes horloges locales à l'instant d'exécution de l'opération considérée comme étant le maximum des datations locales auquel la deuxième marge de temps est additionnée.

4. Procédé selon l'une quelconque des revendications 1 à 3, dans lequel la résolution de chaque horloge (30A, 32A, 34A ; 30B, 32B, 34B) est supérieure ou égale à 100 millisecondes.

5. Contrôleur (20) comportant une pluralité de chaînes de traitement redondantes, chaque chaîne de traitement comportant une première horloge locale (30A, 32A, 34A) propre cadençant la chaîne de traitement respective, et une deuxième horloge locale (30B, 32B, 34B) propre mesurant le temps, le contrôleur (20) étant destiné à faire partie d'un système (18) comportant une horloge globale cadençant le système (18), le contrôleur (20) étant propre à :

- recevoir un premier instant par l'horloge globale,
- transmettre le premier instant pour chaque chaîne de traitement,
- commander chaque chaîne de traitement pour :

• convertir le premier instant en premier instant local,
• mettre en œuvre la même série d'opérations sur les mêmes données d'entrées sur chaque chaîne de traitement à partir du premier instant local,
• incrémenter la deuxième horloge locale (30B, 32B, 34B) propre de la chaîne de traitement considérée tant que la série d'opérations est mise en œuvre, pour obtenir un deuxième instant local,
• calculer l'intervalle de temps local défini comme la différence entre le deuxième instant local et le premier instant local,
• comparer les intervalles de temps locaux calculés pour déterminer un intervalle de temps local commun à une majorité de chaînes de traitement, par mise en œuvre d'un mécanisme de vote,

dans lequel chaque chaîne de traitement comporte une troisième horloge locale propre à dater les événements, le contrôleur (20) étant propre à synchroniser les troisièmes horloges locales de chaque chaîne de traitement sur l'intervalle de temps local commun, chaque chaîne de traitement incrémentant sa troisième horloge locale d'une quantité égale à l'intervalle de temps local commun, la troisième horloge locale étant ainsi synchronisée sur les autres chaînes de traitement.

6. Système comportant un contrôleur (20) selon la revendication 5.

7. Système selon la revendication 6, dans lequel le système (18) est un système de gestion de la circulation d'au moins un véhicule (16) dans une installation ferroviaire (10), l'installation ferroviaire (10) comprenant des voies (12), au moins un véhicule (16) adapté pour circuler sur les voies (12) et au moins une station, le contrôleur (20) étant propre à assurer l'arrivée du véhicule (16) à chaque station et le départ du véhicule (16) à chaque station.

8. Installation ferroviaire (10) comprenant :

- des voies (12),
- au moins un véhicule (16) adapté pour circuler sur les voies (12), et
- au moins un système (18) selon la revendication 6 ou 7.

**Patentansprüche**

1. Verfahren zur Synchronisation eines Systems (18), umfassend eine Vielzahl von redundanten Verarbeitungsketten, das System (18) umfassend einen globalen Taktgeber aufweist, der das System (18) taktet, jede Verarbeitungskette umfassend einen ersten lokalen Taktgeber (30A, 32A, 34A), der die jeweilige Verarbeitungskette taktet, und einen zweiten lokalen Taktgeber (30B, 32B, 34B), der zum Messen der Zeit geeignet ist, das Verfahren umfassend:

- Bereitstellen eines ersten Zeitpunkts durch den globalen Taktgeber für jede Verarbeitungskette,
- Umwandeln des ersten Zeitpunkts in den ersten lokalen Zeitpunkt für jede Verarbeitungskette,
- Durchführen der gleichen Reihe von Operationen über die gleichen Eingabedaten auf jeder Verarbeitungskette ab dem ersten lokalen Zeitpunkt,

- Inkrementieren des zweiten lokalen Taktgebers (30B, 32B, 34B), der jeder Verarbeitungskette eigen ist, solange die Reihe von Operationen durchgeführt wird, um eine zweite lokale Zeit zu erlangen,
- Berechnen eines lokalen Zeitintervalls, das als die Differenz zwischen dem zweiten lokalen Zeitpunkt und dem ersten lokalen Zeitpunkt definiert ist,
- Vergleichen der berechneten lokalen Zeitintervalle, um ein gemeinsames lokales Zeitintervall zu bestimmen, das einer Mehrheit der Verarbeitungsketten gemein ist, wobei das Vergleichen einen Abstimmungsmechanismus implementiert,

wobei jede Verarbeitungskette einen dritten lokalen Taktgeber umfasst, der geeignet ist, die Ereignisse zu datieren, das Verfahren ferner umfassend:

- Synchronisieren der dritten lokalen Taktgeber von jeder Verarbeitungskette mit dem gemeinsamen lokalen Zeitintervall, wobei jede Verarbeitungskette ihren dritten lokalen Taktgeber um einen Betrag inkrementiert, der gleich wie der gemeinsame lokale Zeitintervall ist, wobei der dritte lokale Taktgeber somit mit den anderen Verarbeitungsketten synchronisiert wird.

2. Verfahren nach Anspruch 1, wobei das Verfahren ferner Folgendes umfasst:

- Bereitstellen eines ersten Zeitfensters, und
- Bereitstellen eines lokalen Zeitpunkts, der Ausführung der gleichen Operation auf jeder der Verarbeitungsketten entspricht,
- Datieren des lokalen Zeitpunkts in dem dritten lokalen Taktgeber von jeder Verarbeitungskette, und
- Festlegen eines Herabsetzers der Gesamtheit der dritten lokalen Taktgeber zum Zeitpunkt der Ausführung der betrachteten Operation als das Minimum der lokalen Datierungen, wovon das erste Zeitfenster abgezogen wird.

3. Verfahren nach Anspruch 1 oder 2, wobei das Verfahren ferner Folgendes umfasst:

- Bereitstellen eines zweiten Zeitfensters, und
- Bereitstellen eines lokalen Zeitpunkts, der Ausführung der gleichen Operation auf jeder der Verarbeitungsketten entspricht,
- Datieren des lokalen Zeitpunkts in dem dritten lokalen Taktgeber von jeder Verarbeitungskette,
- Festlegen eines Heraussetzers der Gesamtheit der dritten lokalen Taktgeber zum Zeitpunkt der Ausführung der betrachteten Operation als das Maximum der lokalen Datierungen, zu dem das erste Zeitfenster addiert wird.

4. Verfahren nach einem der Ansprüche 1 bis 3, wobei die Auflösung von jedem Taktgeber (30A, 32A, 34A; 30B, 32B, 34B) größer als oder gleich wie 100 Millisekunden ist.

5. Steuerung (20), umfassend eine Vielzahl von redundanten Verarbeitungsketten, jede Verarbeitungskette umfassend einen eigenen ersten lokalen Taktgeber (30A, 32A, 34A), der die jeweilige Verarbeitungskette taktet, und einen eigenen zweiten lokalen Taktgeber (30B, 32B, 34B), der die Zeit misst, wobei die Steuerung (20) dazu bestimmt ist, Teil eines Systems (18) zu sein, das einen globalen Taktgeber umfasst, der das System (18) taktet, wobei die Steuerung zu Folgendem (20) geeignet ist:

- Empfangen eines ersten Zeitpunkts von dem globalen Taktgeber,
- Übertragen des ersten Zeitpunkts für jede Verarbeitungskette,
- Steuern von jeder Verarbeitungskette zu Folgendem, um:

• den ersten Zeitpunkt in den ersten lokalen Zeitpunkt umzuwandeln,
• die gleiche Reihe von Operationen über die gleichen Eingabedaten auf jeder Verarbeitungskette ab dem ersten lokalen Zeitpunkt durchzuführen,
• Inkrementieren des eigenen zweiten lokalen Taktgebers (30B, 32B, 34B) der betrachteten Verarbeitungskette, solange die Reihe von Operationen durchgeführt wird, um einen zweiten lokalen Zeitpunkt zu erlangen,
• Berechnen des lokalen Zeitintervalls, das als die Differenz zwischen dem zweiten lokalen Zeitpunkt und dem ersten lokalen Zeitpunkt definiert ist,
• Vergleichen der berechneten lokalen Zeitintervalle, um durch Implementieren eines Abstimmungsmechanismus ein gemeinsames lokales Zeitintervall für eine Mehrheit der Verarbeitungsketten zu bestimmen,

wobei jede Verarbeitungskette einen dritten lokalen Taktgeber umfasst, der geeignet ist, die Ereignisse zu datieren, wobei die Steuerung (20) geeignet ist, die dritten lokalen Taktgeber von jeder Verarbeitungskette mit dem gemeinsamen lokalen Zeitintervall zu synchronisieren, wobei jede Verarbeitungskette ihren dritten lokalen Taktgeber um einen Betrag inkrementiert, der gleich wie der gemeinsame lokale Zeitintervall ist, wobei der dritte lokale Taktgeber dadurch mit den anderen Verarbeitungsketten synchronisiert wird.

6. System, umfassend eine Steuerung (20) nach Anspruch 5.

7. System nach Anspruch 6, wobei das System (18) ein System zur Steuerung des Verkehrs von mindestens einem Fahrzeug (16) in einer Eisenbahnanlage (10) ist, wobei die Eisenbahnanlage (10) Gleise (12), mindestens ein Fahrzeug (16), das zum Fahren auf den Gleisen (12) geeignet ist, und mindestens eine Station umfasst, wobei die Steuerung (20) dazu geeignet ist, die Ankunft des Fahrzeugs (16) an jeder Station und die Abfahrt des Fahrzeugs (16) an jeder Station zu gewährleisten.

8. Eisenbahnanlage (10), umfassend:

   - Gleise (12),
   - mindestens ein Fahrzeug (16), das angepasst ist, um auf den Gleisen (12) zu fahren, und
   - mindestens ein System (18) nach Anspruch 6 oder 7.

**Claims**

1. A method for synchronizing a system (18) including a plurality of redundant processing chains, the system (18) including a global clock pacing the system (18), each processing chain including a first specific local clock (30A, 32A, 34A) pacing the respective processing chain, and a second local clock (30B, 32B, 34B) able to measure the time, the method including:

   - providing a first instant via the global clock for each processing chain,
   - converting the first instant into a first local instant for each processing chain,
   - implementing the same series of operations on the same input data on each processing chain from the first local instant,
   - incrementing the second local clock (30B, 32B, 34B) specific to each processing chain is next incremented as long as the series of operations is carried out, to obtain a second local instant,
   - calculating a local time interval defined as the difference between the second local instant and the first local instant,
   - comparing the calculated local time intervals to determine a local time interval shared by a majority of the processing chains, the comparison being carried out by a voting mechanism,

   wherein each processing chain includes a third local clock able to date the events, the method further including:

   - synchronizing the third local clocks of each processing chain on the common local time interval, each processing chain incrementing its third clock by a quantity equal to the common local time interval, the third local clock being synchronized on both processing chains.

2. The method according to claim 1, wherein the method further includes:

   - providing a first time margin, and
   - providing a local instant corresponding to the performance of the same operation on each of the processing chains,
   - dating said local instant in the third local clock of each processing chain, and
   - setting a lower bound for the set of third local clocks at the performance instant of the operation considered to be the minimum of the local datings from which the first time margin is subtracted.

3. The method according to claim 1 or 2 , wherein the method further includes:

   - providing a second time margin, and
   - providing a local instant corresponding to the performance of the same operation on each of the processing chains,
- dating said local instant in the third local clock of each processing chain,
- setting an upper bound for the set of third local clocks at the performance instant of the operation considered to be the maximum of the local datings to which the second time margin is added.

4. The method according to any one of claims 1 to 3, wherein the resolution of each clock (30A, 32A, 34A; 30B, 32B, 34B) is greater than or equal to 100 milliseconds.

5. A controller (20) including a plurality of redundant processing chains, each processing chain including a first specific local clock (30A, 32A, 34A) pacing the respective processing chain, and a second specific local clock (30B, 32B, 32C) measuring the time, the controller (20) being intended to be part of a system (18) including a global clock pacing the system (18), the controller (20) being able to:

- receive a first instant via the global clock,
- send the first instant for each processing chain,
- command each processing chain to:

  • - convert the first instant into a first local instant,
  • - implement the same series of operations on the same input data on each processing chain from the first local instant,
  • - increment the second local clock (30B, 32B, 34B) specific to the processing chain in question as long as the series of operations is carried out, to obtain a second local instant,
  • calculate a local time interval defined as the difference between the second local instant and the first local instant,
  • compare the calculated local time intervals to determine a local time interval shared by a majority of the processing chains by carrying out a voting mechanism,

wherein each processing chain includes a local clock able to date the events, the controller (20) being able to synchronize the third local clocks of each processing chain on the common local time interval, each processing chain incrementing its third clock by a quantity equal to the common local time interval, the third local clock being synchronized on both processing chains.

6. A system including a controller (20) according to claim 7.

7. The system according to claim 6, wherein the system (18) is a system for managing the movement of at least one vehicle (16) in a railway installation (10), the railway installation (10) comprising tracks (12), at least one vehicle (16) suitable for moving on the tracks (12) and at least one station, the controller (20) being able to ensure the arrival of the vehicle (16) at each station and the departure of the vehicle (16) from each station.

8. A railway installation (10), comprising:

- tracks (12),
- at least one vehicle (16) suitable for moving on the tracks (12), and
- at least one system (18) according to claim 6 or 7.

FIG.1

FIG.2

EP 3 296 835 B1

FIG.3

FIG.4

EP 3 296 835 B1

FIG.5

FIG.6

FIG.7

EP 3 296 835 B1

## RÉFÉRENCES CITÉES DANS LA DESCRIPTION

### Documents brevets cités dans la description

- WO 2014051615 A
- US 2011154090 A
- US 6026497 A
- EP 0548381 A